# EUROPEAN PATENT APPLICATION

(11) **EP 2 945 394 A1**
(43) Date of publication of application: **18.11.2015**
(21) Application number: 15167512.1
(22) Date of filing: 13.05.2015
(51) Int. Cl.: H04N 21/4545

(54) **METHOD FOR GENERATING DISPLAYABLE VIDEO CONTENT AND VIDEO SIGNAL PROCESSING APPARATUS FOR IMPLEMENTING SAID METHOD**

(30) Priority: 13.05.2014 US 201414276972
(71) Applicant: Nagravision S.A., 1033 Cheseaux-sur-Lausanne (CH)
(72) Inventor: Stransky, Philippe, 1033 Cheseaux-sur-Lausanne (CH)
(74) Representative: Leman Consulting S.A.

(57) **Abstract**

The present invention concerns a method for generating displayable video content formed of displayable video objects. A displayable video object (203) comprises a first portion (202) and a remaining portion (306). The method comprises :
- processing an encoded digital video stream to produce the first portion (202) of the displayable video object (203), said first portion of the displayable video object occurring in a first portion (302) of a displayable video area;
- generating, when an extended display mode is active, the remaining portion (306) of the displayable video object in a second portion (304) of the displayable video area.

When the extended display mode is not active, the remaining portion (306) of the displayable video object is not displayed in the second portion (304) of the displayable video area.

The second portion (304) of the displayable video area is at least partially adjacent to the first portion (302) of the displayable video area.

## Description

### TECHNICAL FIELD

The present document relates to processing and display of a digital image or a digital video signal.

More specifically, the present invention concerns a method for generating displayable video content wherein said displayable video content is formed of displayable video objects and wherein a displayable video object comprises a first portion and a remaining portion.

The present invention also concerns video signal processing apparatus for implementing said method.

### BACKGROUND ART

Display technologies such as Liquid Crystal Display (LCD) and Light Emitting Diodes (LED) are making it possible to economically produce displays with larger and larger screen sizes. It has become quite common for consumers to purchase television screens with diagonal size of 65 inches and above. Content displayed on the large screens is often simply a larger sized rendition of content that is produced for displaying on a smaller display.

Techniques are disclosed for providing immersive, three-dimensional (3-D) display experience to a viewer. By selectively displaying video objects in certain display areas, an appearance is provided to a viewer that the object is actually present in the vicinity of the viewer. For example, by limiting the viewing area of normal video to less than the entire screen size, an object is allowed to visually appear to be beyond the boundaries of the displayed area, thereby providing an appearance of the object being there.

In some display systems, the user experience in watching a video tends to be limited to viewing the video as a sequence of successive frames displayed on a two-dimensional (2-D) screen such as a cathode ray tube (CRT) screen or a liquid crystal display (LCD) screen. In the recent years, advances in technologies have made it possible to provide three dimensional (3-D) viewing, which adds a perception of depth, to the video displayed to the viewer. Some technologies also provide an additional level of immersive experience by using large sized or curved display surfaces. Examples include immersive display technologies, such as IMAX, which provide the effect that the video events are happening around the viewer, and other display technologies that use curved displays or large sized displays for adding 3-D or immersive reality to video.

Prices of large screen televisions (e.g., televisions with screen sizes 60 inches or higher) have come down in the recent years, while at the same time the physical footprint and power consumed by these display devices have also been reduced significantly. These days, it is not uncommon for typical residential or commercial users (e.g., hotel rooms or business waiting areas) to replace the traditional 30 to 35 inch television sets with larger screen sized displays that occupy smaller or no floor space.

The large displays can be designed to be thin, light-weight and wall-mountable. It is not uncommon for LCD displays to have a weight less than 50 kilograms and a thickness of 5 centimetres or less, making them suitable for wall mounting. The combination of flat screen technology and large display size can present video to a viewer as if the viewer were looking at a scene from a large window right in front of the viewer.

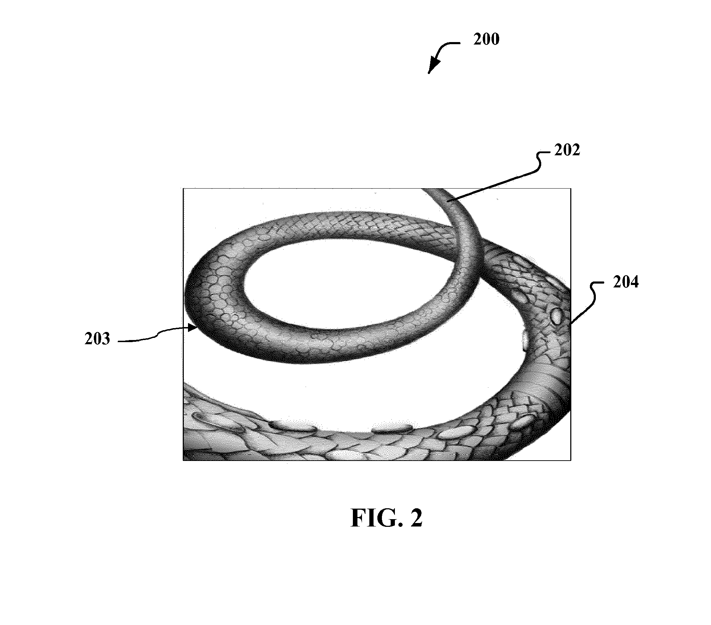

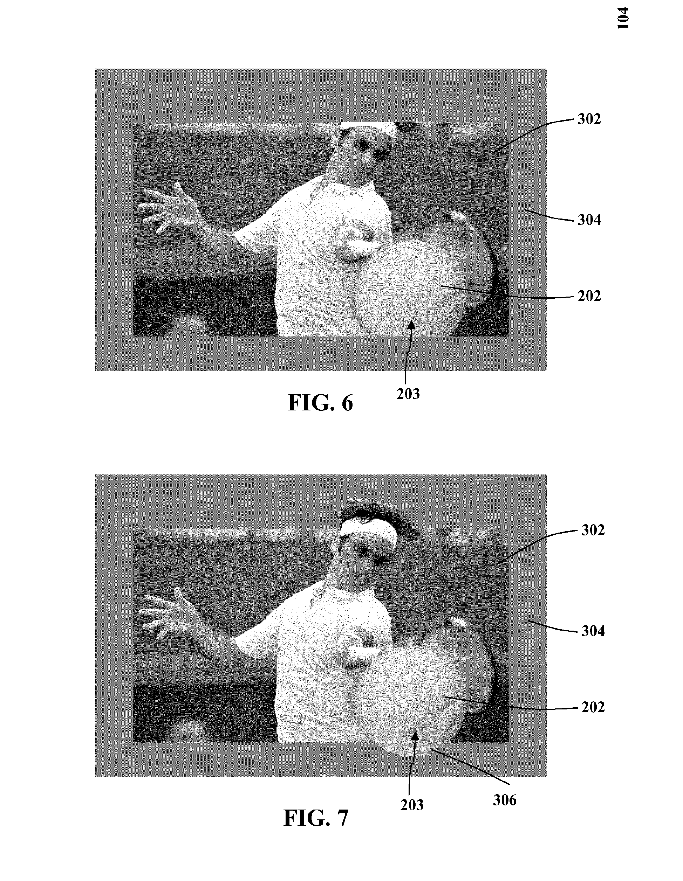

One of the problems with various displays and 3-D content presentation techniques is that the video objects may appear cut, or chopped, when they extend beyond the limits of the screen. This effect leads to an undesirable viewing experience, in particular when the object is looping back into the screen. An example is given in Fig. 2 and 6, described in greater detail below.

Further, some existing large screen displays simply make the same content look bigger, without harnessing the greater screen size for providing additional viewer experience.

### SUMMARY OF THE INVENTION

The present invention seeks to overcome drawbacks of the techniques and displays of the prior art.

Some embodiments disclosed in the present document can be used to provide an immersive display experience to a viewer by using the large size of displays. In some embodiments, a large screen is used to display regular video content on a smaller area of the screen, with the perimeter area of the screen adapted to provide image transitions that provide immersive or 3-D display experience to a viewer. For example, in some embodiments, a 50-inch diagonal rectangle at the center of a screen-size of a 65-inch diagonal may be used to normally display video, with the remaining perimeter of the rectangle around it being used as a 3-D overflow display region. In the 3-D overflow display region, video objects are selectively displayed, based on triggers provided in the video, or based on a setting of the display, or using another technique disclosed herein, so that video objects may appear to spill out of the screen and into the living room in which the viewer is viewing the content.

These, and other, techniques are described in the present document. In one advantageous aspect, the disclosed solutions provide an effective perception of having a video display that may effectuate a perceived visual effect as being "unlimited" in dimensions, even when video objects spill beyond the normal display area into the overflow region only on rare occasions.

Objects of the present invention are achieved by a method as defined in the preamble, said method comprising:
- processing an encoded digital video stream to produce the first portion of the displayable video object, wherein said first portion of the displayable video object occurs in a first portion of a displayable video area;
- generating, when an extended display mode is active, the remaining portion of the displayable video object in a second portion of the displayable video area;
- wherein, when the extended display mode is not active, the remaining portion of the video object is not displayed in the second portion of the displayable video area.

Other objects of the present invention are achieved by a video signal processing apparatus as defined in the preamble and comprising:
- a display mode selector that can activate and deactivate an extended display mode for a displayable video area having a first portion and a second portion at least partially adjacent to the first portion of the displayable video area;
- a video decoder that decodes an encoded video stream comprising a sequence of encoded rectangular video frames having a dimension of Y lines and X pixels per line to produce the first portion of the displayable video area, wherein a first portion of a displayable video object occurs in the first portion of the displayable video area, wherein the first portion of the displayable video area comprises less than Y lines and/or less than X pixels per line of the rectangular video frames;
- a display generator that generates, when the extended display mode is active, a remaining portion of the displayable video object in the second portion of the displayable video area; and wherein, when the extended display mode is not active, the remaining portion of the displayable video object is not displayed in the second portion of the displayable video area.

Still a further aspect of the invention concerns a display apparatus. The apparatus includes a connector to receive a video signal. The apparatus also includes a display having a first portion on which a first portion of the received video signal is displayed and a second portion that is non-overlapping with the first portion on which a second portion of the received video signal is displayed to provide a perception of depth for a visual object encoded in the video signal.

These and other aspects and their implementations are described in greater detail in the drawings, the description and the claims.

### BRIEF DESCRIPTION OF DRAWINGS

The present invention and its advantages will be better understood with reference to the enclosed drawings and to the detailed description. Embodiments described herein are illustrated by way of example and not limitation in the figures of the accompanying drawings, in which like reference numbers indicate similar elements and in which:
- FIG. 1 is an example of a video communication network;
- FIG. 2 depicts an example of a display without an immersive display experience;
- FIG. 3 depicts an example of depicting extended information on a display;
- FIG. 4 depicts an example of concealing a portion of display using ambience;
- FIG. 5 depicts a further example of a display;
- FIG. 6 represents a displayable video area as used in the case that the extended display mode is not active;
- FIG. 7 represents the displayable video area of Fig. 6, in the case that the extended display mode is active;
- FIG. 8 is a flowchart depiction of an example of a method of generating displayable video content;
- FIG. 9 is a block diagram representation of an example of a display apparatus; and.
- FIG. 10 is a block diagram representation of an example of a video signal processing apparatus.

### DETAILED DESCRIPTION

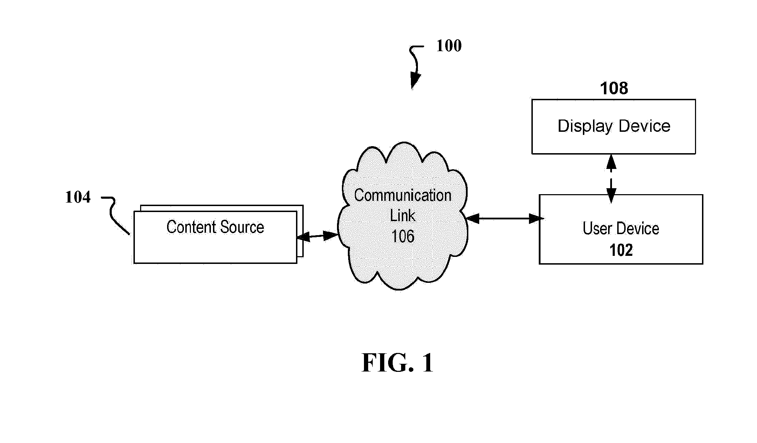

Fig. 1 depicts an example of a video communication system 100. A user device 102 receives video content from a content source 104 from a communication link 106 (e.g., an internet protocol, IP, network or a signal bus internal to a device). Said video content is formed of displayable video objects 203. A displayable video object is a picture or a part of a picture forming a conceptual group. For example, in Fig. 6 and 7, one displayable video object is the tennis ball; another one is the tennis player and a third displayable video object is the background. The user device 102 may be coupled to a display device 108. For example, the user device may be a set-top box, a personal video recorder (PVR), a smartphone, a computer, a tablet device, etc. The display device 108 may be built into the user device 102 (e.g., a tablet device) or may be separate from the user device 102 (e.g., a television connected externally to a set-top box).

In some embodiments, the video communication system 100 can include a traditional video delivery network such as a digital cable network or a satellite or terrestrial television delivery system. In some embodiments, the video communication system 100 may be contained within a user device such as a PVR, with the content source 104 being a storage device (e.g., a hard drive) within or attached to the PVR and the communication link 106 being an internal data bus.

Fig. 2 shows an example of a display 200 on which a first portion 202 of a displayable video object 203 is being displayed. As can be seen from the depiction, some portion of the object 203 (e.g., a remaining portion not shown, in region 204) may visually appear to be cut out of the edges or boundaries of the display 200. Regardless of the size of display, the visual clipping of objects may result in an unsatisfactory user experience in that a viewer may feel that somehow the size of the display is limiting her ability to enjoy the full view of the video content. In this Figure, an extended display mode is not active and the whole surface of the display 200 or displayable video area is used.

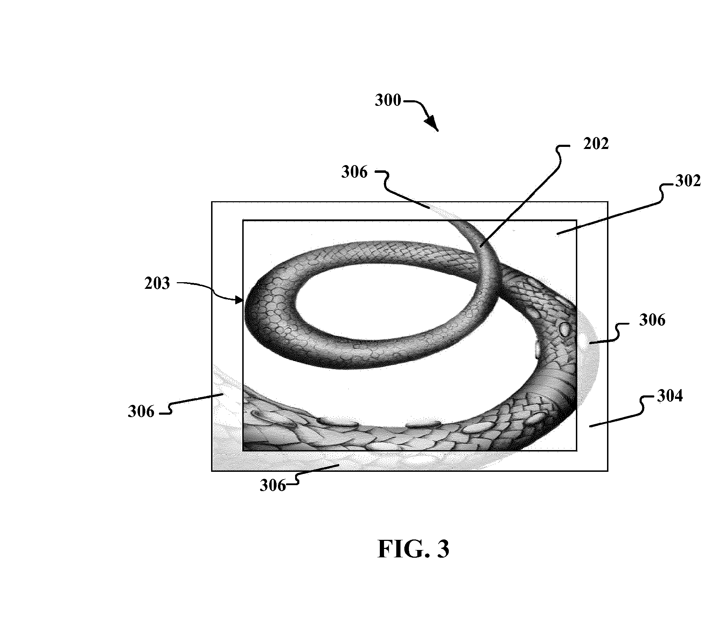

Fig. 3 illustrates an example display 300 in an embodiment in which an extended display mode is active. In such an extended display mode, additional parts of the displayable video object(s) are displayed, compared the non extended display mode. The extended display mode gives a perception of depth to the viewer. The display 300 comprises a first portion 302 of a displayable video area and a second portion 304 of the displayable video area, which is adjacent to the first portion 302 and which can be, e.g., a peripheral portion outside the first portion 302 which is the central portion of the display. The displayable video object 203 comprises a first portion 202 and a remaining portion 306 of the displayable video object. The displayable video object is present not just in the first portion 302 of the displayable video area, but also in the second portion 304 of that displayable video area. In the depiction, the display 300 or displayable video area is shown to be rectangular, the first portion of the displayable video area being a smaller rectangle on the inside of the rectangle making up the display 300 and the second portion corresponding to the remaining portion that is peripheral to and surrounds the inner portion. In different embodiments, the first portion 302 and the second portion 304 of the display may have different shapes and may be placed adjacent or side-by-side, or the second portion 304 may surround the first portion 302 on less than all four sides.

In the area of the second portion of the displayable video area where the remaining portion 306 of the object is present, the object 203 may be displayed in a visually different manner than the display within the first portion 302, as described in this document. In one advantageous aspect, when a viewer views the display 300, due to the visual presence of the object outside of the first portion 302, which may be the main screen being watched by the viewer, the viewer may get the visual effect that the display is flexibly increasing in size to accommodate the bigger object in the video.

According to another embodiment, as illustrated in Fig. 7, the object 203 may be displayed substantially in the same manner in the second portion of the displayable video area than in the first portion of the displayable video area. In this case, the remaining portion 306 of the object is a continuation of the first portion 202 of the object. In a preferred embodiment, the background in the second portion of the displayable video area is different than the background of the first portion of the displayable video area, thereby providing a perception of depth for the displayable video object.

In some embodiments, the second portion may be considered an overflow or transition region in which large objects in a video frame may be cropped to fit active or visible area of the screen (the first production), but in post-production, the object in the second area may be preserved and encoded into the video stream with a special notation. For example, information about objects contained within a video may be added to a video bitstream, either manually by a video editor or automatically using a content analysis tool, along with depth information about to content, e.g., whether the object is coming out towards the viewer or going away from the user. More specifically, according to existing video encoding formats, a picture may contain several objects, the object being associated with depth information. In this case, the objects can be considered as being associated with a layer. When a picture is displayed on a display, the layers are superimposed to compose the complete picture. In such object coded compression schemes, it is possible to process objects independently from one another. For example, it is possible to define the size of the objects to occupy the whole displayable video area, as in Fig. 2. It is also possible to impose a condition that the first portion of the displayable video object is displayed in the first portion of the displayable video area, with the remaining portion of the displayable video object being displayed in the second portion of the displayable video area, as illustrated by Fig. 3.

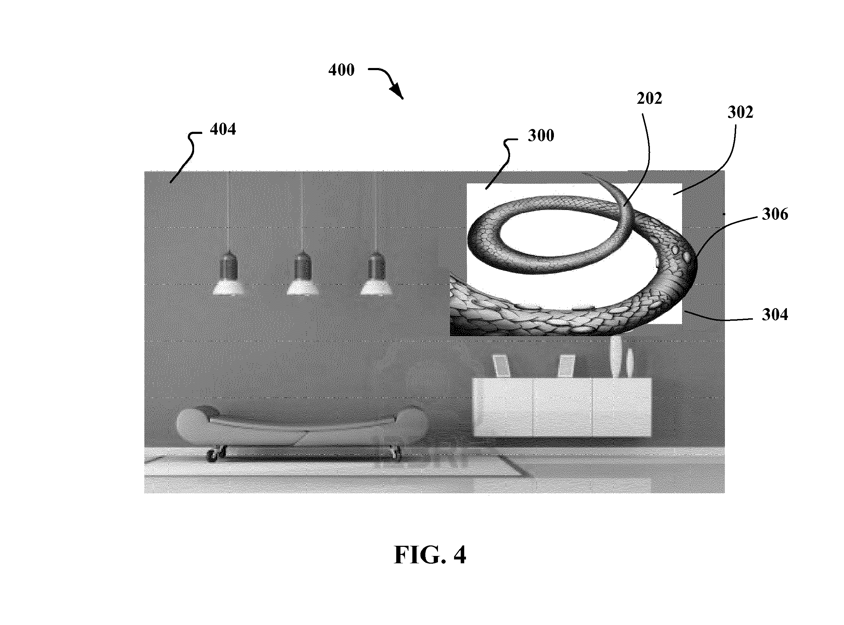

Fig. 4 depicts an example configuration 400 in which the displayable video area or the display 300 is located on a wall 404 in a user premise. In this configuration, the background of the display 300 includes the wall 404, which may have a wall color such as green or maroon. The display 300 may be operated to ordinarily display video content in a smaller area (e.g., corresponding to the first portion 302 of the displayable video area), with the surrounding second portion 304 of the displayable video area kept un-illuminated, or to have the same color as the background wall (e.g., to make it appear indistinguishable from the background), and so on. When a large object is present in the video, the first portion 202 of the displayable video object is displayed on the first portion 302 of the displayable video area and the remaining portion 306 of the displayable video object is displayed on the second portion 304 of the display. Such a selective use of the display may provide a visual effect of the display 300 providing a depth to the object by allowing the object to extend beyond the boundaries of the picture.

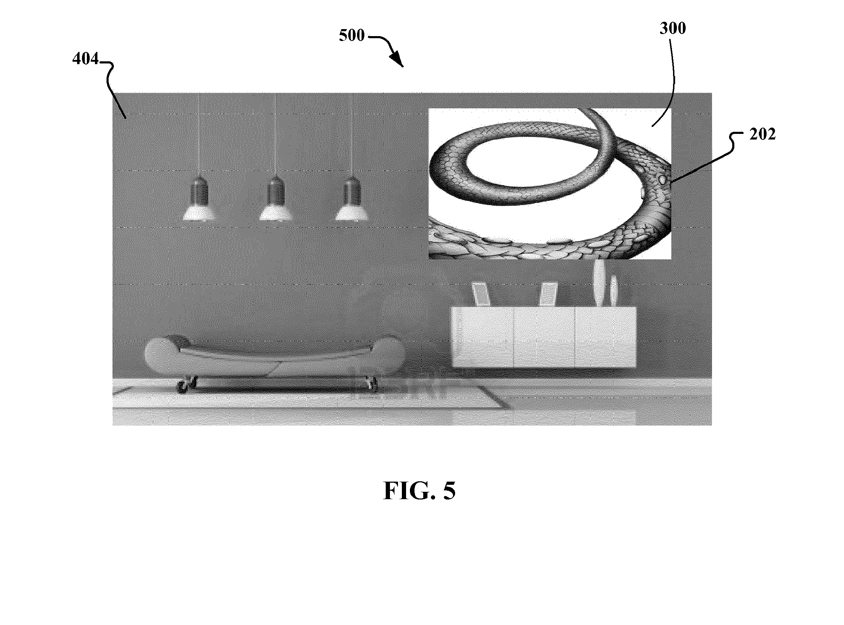

By comparison, Fig. 5 depicts an example configuration 500 in which the displayable video area or display 300 is configured to display the entire larger rectangular image, regardless of whether or not a large object is present in the video content. It will be appreciated that the addition of depth perception and the immersive experience of a video object coming out of the display and into the room in which the video is being watched, as depicted in Fig. 4, may provide a greater or enhanced level of viewing experience compared to the configuration 500 in Fig. 5.

Fig. 6 and 7 illustrate an example of a picture in which extended display mode is not active and in which extended display mode is active, respectively. In these Figures, the displayable video area comprises a first portion 302 and a second portion 304. The video content comprises for example three objects, namely a background, a picture of a tennis player and a picture of a ball. These objects are associated with depth information.

In Fig. 6, the extended display mode is not active. In this case, all the objects are truncated to fit in the first portion 302 of the displayable video area. It should be understood that the second portion 304 of the displayable video area could display a specific color, a specific pattern, be switched off, ... In a preferred embodiment, when the extended display mode is not active, the behaviour of the second portion of the displayable video area is driven locally, i.e. by the user device 102. The behaviour of the second portion of the displayable video area could however also be driven by the content source. According to a specific embodiment, when the extended display mode is not active, the first portion of the displayable video area could be stretched to use the whole available surface of the displayable video area. In this case, there will be no second portion of the displayable video area.

Fig. 7 shows the display of the same video content as the video content of Fig. 6, with the extended display mode active. In Fig. 6 and 7, the object "background" is identical. The objects "Tennis player" and "ball" are different. In Fig. 7, for example the ball is not truncated to fit in the first portion of the displayable video area. On the other hand, a remaining portion 306 of the object 203 is displayed in the second portion 304 of the displayable video area. The same applies to the object "Tennis player". The decision concerning which object is partly displayed in the second portion of the displayable video area can depend on the depth information associated with the object. The part of the second portion of the displayable video area in which no remaining portion of an object is displayed can display a uniform color, a pattern, be switched off, remain transparent, ...The second portion of the displayable video area does in particular not display the background displayed in the first portion of the displayable video area.

As can be seen by comparing Fig. 6 and 7, displaying the remaining portion of an object in the second portion of the displayable video area while not displaying the background in the second portion provides a perception of depth to the viewer.

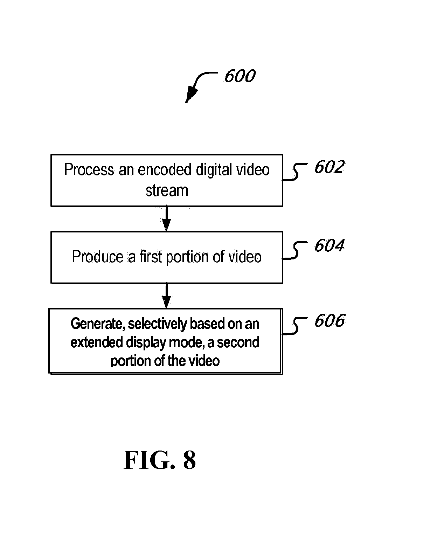

Fig. 8 is a flowchart representation of a method 600 of generating displayable video content formed of displayable video objects. The method 600 may be implemented in a consumer device, e.g., a set-top box, an integrated television set or other suitable display systems.

At 602, the method 600 processes an encoded digital video stream to produce a first portion of displayable video area. A first portion of a displayable video object may occur in the first portion of the displayable video area. The displayable video area may, e g., correspond to a rectangular screen.

In some embodiments, the encoded digital video stream may conform to a well-known video or image compression format such as MPEG or JPEG or a variation thereof. It can be advantageous to use object oriented compression schemes. The encoded video may be compressed using a lossy or a lossless compression algorithm. In some embodiments, the first portion of the displayable video area may be produced in a frame buffer or a memory of a decoder. The processing of the encoded digital video stream may include parsing the received video data to de-multiplex video and audio data, decompressing the video and audio data, and storing the decompressed video/audio data in respective buffers for transmitting via a connector interface to a display. The connector interface may be, e.g., DB-25, VGA, USB, HDMI, or another well-known interface.

The operation of method 600 may be controlled by an extended display mode setting. The extended display mode setting or an instruction to activate or deactivate the extended display mode may be communicated in the video bitstream via a trigger mechanism (e.g., a bit field in the bitstream, or an entitlement message in the video bitstream). In some embodiments, the extended display mode may be turned on or off at a user's command received from a user interface such as via a front panel or a remote control.

At 604, the method 600 generates, when the extended display mode is active, a remaining portion of the displayable video object in the second portion of the displayable video area.

In some embodiments, the displayable video area may correspond to a first rectangle having a first area and a center. The displayable video area may be, e.g., the entire screen size of video resolution. For example, the encoded digital video stream may comprise video frames having X pixels per line and Y lines of resolution (e.g., 1920 pixels x 1080 display lines), and the displayable video area may comprise the entire X pixels x Y lines size.

At 606, when the extended display mode is not active, the remaining portion of the displayable video object is not displayed in the second portion of the displayable video area. According to various embodiments, the second portion of the displayable video area may be used in different ways. A smooth transition from the active display (first portion of the displayable video area) to the ambience (e.g., a back wall on which a display is mounted) may be provided by the second portion of the displayable video area. For example, in some embodiments, luminance of the second portion of the displayable video area (e.g., the perimeter of a rectangular display) may be set to a value that is below a threshold. The threshold may be a predetermined threshold, or a percent of the brightness setting of the entire display screen, or may be derived from the ambient light condition or the background of the display.

In some embodiments, the method 600 may include measuring ambient light condition and adjusting luminance of the second portion of the displayable video area based on the ambient light condition. For example, the luminance may be proportional to ambient light, i.e., a lower ambient light may result in a lower luminance peak in the second portion by scaling down the picture content of the second portion.

In some embodiments, the second portion of the displayable video area may be used to provide a visual transition between the first portion of the displayable video area (i.e., the inner rectangle on which the video is normally displayed) and a background of the display. In some embodiments, a color may be selected from content being displayed in the first portion of the displayable video area. For example, the selected color may be a dominant color, e.g., most frequently occurring color. The method 600 may use the selected color to display on the second portion of the displayable area. In one example embodiment, the selected color may be uniformly displayed throughout the entire second portion of the displayable video area. In another example embodiment, the selected color may be transitioned from the dominant color value close to the first portion of the displayable video area to the color of the background on which the display is mounted.

In some embodiments, the second portion of the display area may be illuminated to make it visually indistinguishable from the background when remaining portions of displayable video objects are not being displayed. In some embodiments, the second portion of the display may be illuminated with constant luminance value (e.g., no chroma) which may provide the appearance of a mirror-like border to the first portion of the display. In some embodiments, a sensor may be placed on the display to sense color and luminance of the background, and the sensed information on the color and luminance can be used to control the display by the display control circuit so that the same color and luminance may be projected on the front side in the second portion. This sensor-based display control may provide a visual effect as if the second portion were not present and the display has an appearance of being simply limited to the inside (first) portion of the displayable area.

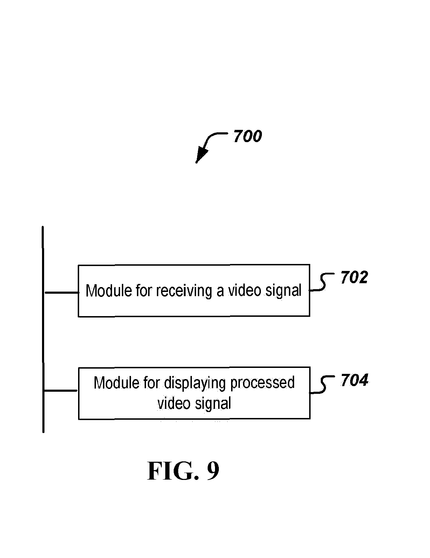

Fig. 9 is a block diagram representation of an example of an apparatus 700 according to an embodiment of the present invention. The module 702 is for receiving a video signal. The module 702 may be, e.g., a peripheral bus connector such as a universal serial bus (USB) connector or a wired or wireless network connection. The module 704 comprises a display or a displayable video area. The display may, e.g., be the display 300 disclosed previously. The display be configured and controlled to have a first portion on which a first portion of objects defined in the received video signal is displayed. The displayable video area comprises a second portion adjacent to the first portion, on which a remaining portion of objects defined in the received video signal is displayed to provide a perception of depth for a visual object encoded in the video signal. In some embodiments, the second portion of the displayable video area is non-overlapping with the first portion (e.g., the first portion of the displayable video area is an inside rectangle and the second portion is the surrounding perimeter region). Alternatively, the first and second portions of the displayable video area may overlap, e.g., have a transition region in which video is both displayed normally and during extended rendering for objects.

In some embodiments, e.g., as depicted in Fig. 3, 6 and 7, the displayable video area is rectangular in shape, the first portion of this displayable video area comprises a smaller rectangle inside the rectangular shaped display and the second portion of the displayable video area forms a border around the smaller rectangle. In some embodiments, the first portion lies entirely inside the rectangular shaped display.

In some embodiments, the received video signal comprises a sequence of encoded video frames, each frame including a first number of lines and each line comprising a second number of pixels, wherein the first portion of the received video signal corresponds to portions of encoded video frames, each having fewer than the first number of lines and/or fewer than the second number of pixels per line.

In some embodiments, the apparatus also includes an extended display effect control module that can selectively control an amount of the second portion of the received object encoded in the video signal displayed on the second portion of the displayable video area to control the perception of depth.

In some embodiments, the apparatus includes an ambient light detector module that measures an ambient light condition, and a luminance adjuster that adjusts the intensity of the second portion of the video signal based on the detected ambient light condition.

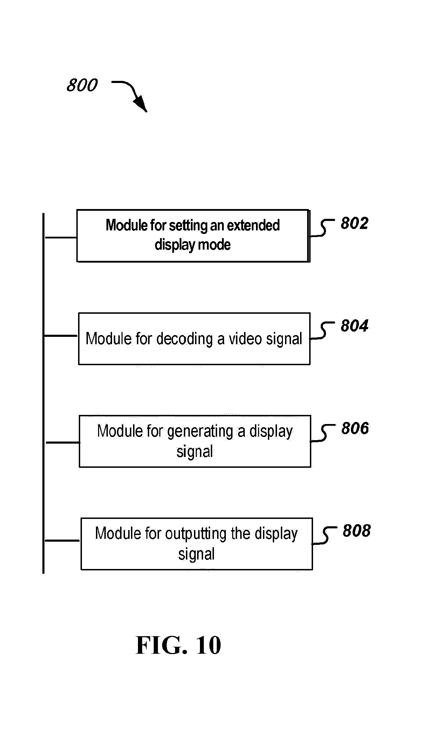

Fig. 10 is a block diagram depiction of an example of a video signal processing apparatus 800 according to an embodiment the invention. The apparatus 800 may be embodied as a set-top box or another user device. The apparatus 800 includes a display mode selector, a video decoder, a display generator and a video output connector. The display mode selector can activate or deactivate the extended display mode. The display mode selector may control a displayable video area having a fist portion and a second portion that is adjacent and possibly peripheral to the first portion (e.g., as described with respect to Fig. 3). The video decoder decodes an encoded video stream comprising a sequences of encoded rectangular video frames having a dimension of Y lines and X pixels per line to produce the first portion of displayable video area, wherein a displayable video object partly occurs in the first portion of the displayable video area, wherein the first portion of displayable video area comprises less than Y lines and/or less than X pixels per lines of the rectangular video frames. More specifically, a displayable video object is formed of a first portion and of a remaining portion. The first portion of the displayable video object is displayed in the first portion of the displayable video area. When the extended display mode is active, the remaining portion of the displayable video object is displayed in the second portion of the displayable video area. When the extended display mode is not active, the remaining portion of the object is not displayed in the second portion of the displayable video area and the displayable video object (if this object extends outside the first portion) is truncated to fit into the first portion of the displayable video area. The video output connector outputs a video signal generated by the display generator.

In some embodiments, the apparatus 800 may further include a user interface. The display mode selector activates or deactivates the extended display mode based on an input received at the user interface. In some embodiments, the apparatus 800 further includes a sensor that senses a visual pattern on a background of the display to produce a sensor signal representative of the sensed visual pattern. The display generator may be coupled to the sensor to receive the sensor signal and to produce the sensed visual pattern on the second portion of the displayable video area.

Several variations of the disclosed technology may be practiced in various embodiments.

In some embodiments, the overflow area i.e. the second portion 304 of the displayable video area is illuminated to be black (zero luminance). This mode may be suitable when the display 300 operates in home theatres that usually have dark ambience.

In some embodiments, the overflow area i.e. the second portion 304 of the displayable video area is illuminated to have white (maximum luminance) or light grey (mid-range luminance). This setting may be suitable when watching in day light.

In some embodiments, the constant luminance value in the overflow area i.e. the second portion 304 of the displayable video area is dimmed according to the ambient light.

In some embodiments, the background sensor may be a camera installed on a television display for detecting the ambient light. For low complexity and privacy concern, the pixel resolution of the camera may be substantially small (e.g., less than 144 pixels or line).

In some embodiments, a camera placed on the front side of the display 300 may be used to capture the visual scene in front of the display and reproduce the corresponding picture on the overflow area to give the effect of the second portion 304 of the displayable video area being a mirror.

In some embodiments, various modes of operation of the display may be signalled through the video bitstream and/or set at the user device 102 and/or at the display device 108 to support one or more of: how to use the second portion of the displayable video area, whether to use the full screen area for entire content, thereby removing the second portion of the displayable video area, and so on.

It will be appreciated that several techniques are disclosed to enable extended display mode on a large screen by using an overflow or a transition region in which video objects are selectively displayed to provide a visual appearance of the video objects being present in the room.

It will be appreciated that extended display mode may be used in 2D display mode as well as in 3D display mode. In 2D display mode, the display of the remaining portion of an object adds a perception of depth to the video displayed to the viewer. This can be understood in particular by comparing Fig. 6 and Fig. 7. This perception of depth is also valid in a 3D display mode in which each eye of a viewer receives a slightly different picture.

It will further be appreciated that the disclosed techniques may be practiced by encoding corresponding extended display mode control parameters into video bitstreams (e.g., during video production) or by controlling an operational mode of a user device or a display device.

The disclosed and other embodiments, modules and the functional operations described in this document (e.g., a content network interface, a look-up table, a fingerprint processor, a bundle manager, a profile manager, a content recognition module, a display controller, a user interaction module, a feedback module, a playback indication module, a program guide module, etc.) can be implemented in digital electronic circuitry, or in computer software, firmware, or hardware, including the structures disclosed in this document and their structural equivalents, or in combinations of one or more of them. The disclosed and other embodiments can be implemented as one or more computer program products, i.e., one or more modules of computer program instructions encoded on a computer readable medium for execution by, or to control the operation of, data processing apparatus. The computer readable medium can be a machine-readable storage device, a machine-readable storage substrate, a memory device, a composition of matter effecting a machine-readable propagated signal, or a combination of one or more them. The term "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of one or more of them. A propagated signal is an artificially generated signal, e.g., a machine-generated electrical, optical, or electromagnetic signal, which is generated to encode information for transmission to suitable receiver apparatus.

A computer program (also known as a program, software, software application, script, or code) can be written in any form of programming language, including compiled or interpreted languages, and it can be deployed in any form, including as a stand alone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this document can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and any one or more processors of any kind of digital computer. Generally, a processor will receive instructions and data from a read only memory or a random access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Computer readable media suitable for storing computer program instructions and data include all forms of non volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

While this patent document contains many specifics, these should not be construed as limitations on the scope of an invention that is claimed or of what may be claimed, but rather as descriptions of features specific to particular embodiments. Certain features that are described in this document in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or a variation of a sub-combination. Similarly, while operations are depicted in the drawings in a particular order, this should not be understood as requiring that such operations be performed in the particular order shown or in sequential order, or that all illustrated operations be performed, to achieve desirable results.

Only a few examples and implementations are disclosed. Variations, modifications, and enhancements to the described examples and implementations and other implementations can be made based on what is disclosed.

## Claims

1. Method for generating displayable video content wherein said displayable video content is formed of displayable video objects (203) and wherein a displayable video object comprises a first portion (202) and a remaining portion (306), said method comprising:
- processing an encoded digital video stream to produce the first portion (202) of the displayable video object, wherein said first portion (202) of the displayable video object occurs in a first portion (302) of a displayable video area;
- generating, when an extended display mode is active, the remaining portion (306) of the displayable video object in a second portion (304) of the displayable video area; and
- wherein, when the extended display mode is not active, the remaining portion (306) of the video object is not displayed in the second portion (304) of the displayable video area.

2. Method according to claim 1, wherein the displayable video area comprises a first rectangle having a first area and a center, and wherein the first portion (302) of the displayable video area comprises a second rectangle centered at the center and having a second area less than the first area and the second portion (304) of the displayable video area comprises portion of the first rectangle that is non-overlapping with the second rectangle, the second portion (304) of the displayable video area being at least partially side by side to the first portion (302) of the displayable video area.

3. Method according to any of claims 1 and 2, wherein the processing includes performing video decompression.

4. Method according to any of the preceding claims, wherein generating the remaining portion (306) of the displayable video object (203) includes generating a visual characteristic of the displayable video object based on depth information.

5. Method according to any of claims 1 to 3, wherein, when the extended display mode is not active, luminance of the second portion (304) of the displayable video area is set below a threshold.

6. Method according to any of claims 1 to 3, wherein, when the extended display mode is not active:
- an ambient light condition is measured; and
- luminance of the second portion (304) of the displayable video area is adjusted, based on the ambient light condition.

7. Method according to any of claims 1 to 3, wherein, when the extended display mode is not active:
- a color is selected from the first portion (302) of the displayable video area; and
- the selected color is used for the second portion (304) of the displayable video area.

8. Method according to claim 7, wherein the selected color is a dominant color of the first portion (302) of the displayable area.

9. Method according to any of claims 1 to 3, wherein, when the extended display mode is not active, video pixel values are selected in the second portion (304) of the displayable video area to a mid-range value to facilitate a mirror-like display operation.

10. Method according to any of claims 1 to 3, wherein, when the extended display mode is not active, a visual pattern is sensed on a back side of the displayable video area and the sensed visual pattern is displayed on a front side of the displayable video area.

11. Method according to any of the preceding claims, comprising:
- receiving an instruction for activating or deactivating the extended display mode in the encoded digital video stream.

12. Method according to any of the preceding claims, comprising:
- receiving an instruction for activating or deactivating the extended display mode from a user interface.

13. Video signal processing apparatus, comprising:
- a display mode selector that can activate and deactivate an extended display mode for a displayable video area having a first portion (302) and a second portion (304) at least partially side by side to the first portion of the displayable video area;
- a video decoder that decodes an encoded video stream comprising a sequence of encoded rectangular video frames having a dimension of Y lines and X pixels per line to produce the first portion of the displayable video area, wherein a first portion (202) of a displayable video object occurs in the first portion (302) of the displayable video area, wherein the first portion of the displayable video area comprises less than Y lines and/or less than X pixels per line of the rectangular video frames;
- a display generator that generates, when the extended display mode is active, a remaining portion (306) of the displayable video object in the second portion (304) of the displayable video area; and wherein, when the extended display mode is not active, the remaining portion (306) of the displayable video object is not displayed in the second portion (304) of the displayable video area.

14. Video signal processing apparatus according to claim 13, further comprising a user interface and wherein the display mode selector activates or deactivates the extended display mode based on an input received at the user interface.

15. Video signal processing apparatus according to claim 13, comprising:
- a sensor that senses a visual pattern on a background of the display to produce a sensor signal representative of the sensed visual pattern,
- said display generator being coupled to the sensor to receive the sensor signal and to produce the sensed visual pattern on the second portion of the displayable video area.
